Europäisches Patentamt

(19) European Patent Office

Office européen des brevets

(11) Numéro de publication : **0 194 169 B1**

(12) **FASCICULE DE BREVET EUROPEEN**

(45) Date de publication du fascicule du brevet :
03.04.91 Bulletin 91/14

(51) Int. Cl.⁵ : **F16B 3/00, B64G 9/00**

(21) Numéro de dépôt : **86400179.7**

(22) Date de dépôt : **29.01.86**

(54) Dispositif de liaison démontable à tétraèdre.

(30) Priorité : 31.01.85 FR 8501353

(43) Date de publication de la demande :
10.09.86 Bulletin 86/37

(45) Mention de la délivrance du brevet :
03.04.91 Bulletin 91/14

(84) Etats contractants désignés :
CH DE GB IT LI SE

(56) Documents cités :
CH-A- 98 330
FR-A- 1 123 172

(56) Documents cités :
GB-A- 2 118 075
US-A- 3 737 117
Feinmechanische Bauelemente, Prof. Hildebrand, 1978, p. 589

(73) Titulaire : AGENCE SPATIALE EUROPEENNE
8-10, rue Mario Nikis
F-75738 Paris Cedex 15 (FR)

(72) Inventeur : Cable, Neil
Kruisbes 41
Leiden (NL)

(74) Mandataire : Rodhain, Claude et al
Cabinet Claude Rodhain 30, rue la Boétie
F-75008 Paris (FR)

Jouve, 18, rue Saint-Denis, 75001 PARIS

## Description

La présente invention se rapporte à un dispositif de liaison permettant l'assemblage et la solidarisation de pièces, dans une position relative déterminée et précise, tout en permettant une désolidarisation aisée et instantanée des deux pièces.

Le dispositif selon l'invention ne requiert pour son fonctionnement qu'une seule action de verrouillage, puis une seule action de déverrouillage, correspondant chacune à l'application d'une force unique exercée dans une direction donnée.

L'invention décrit également plusieurs modes d'application du dispositif de liaison démontable, notamment pour la manipulation de pièces dans les systèmes robotisés.

La fixation d'un objet dans une position déterminée, puis sa libération lorsqu'il doit être déplacé, constituent des problèmes couramment rencontrés dans la conception de machines. Les liaisons requises pour ce type de fonction doivent présenter des propriétés spécifiques. Toutefois, fréquemment, les dispositifs conçus ne possèdent que des caractéristiques insatisfaisantes, et leur manipulation n'est possible que grâce à l'intervention de l'ingéniosité et de la dextérité de l'utilisateur au moment de la fixation ou de la désolidarisation. La nécessité d'une intervention humaine trahit bien l'imperfection de ces dispositifs connus.

Or, on a trouvé que grâce à la mise en oeuvre de mesures appropriées, on peut maintenir parfaitement sous contrôle l'objet à assembler, pendant toute la durée des opérations, en réduisant considérablement ou même en éliminant une intervention humaine extérieure. Cette caractéristique de l'invention la rend tout à fait compatible avec la tendance générale à l'automatisation et la robotisation des systèmes. La simplicité et la sûreté de fonctionnement du dispositif permettent aisément qu'il soit manoeuvré par une machine.

Au total, les objectifs qui ont été poursuivis et atteints dans le cadre de la réalisation de l'invention consistaient à analyser les systèmes d'assemblage existant pour les simplifier, afin de produire un mécanisme simple et réutilisable assurant un positionnement précis et une libération instantanée pour une application préférentielle aux assemblages temporaires.

Les dispositifs connus présentent généralement l'inconvénient majeur qu'ils constituent des mécanismes incapables de générer des conditions satisfaisantes de fixation et de relâchement d'un objet, dans la mesure où leurs actions respectives interfèrent au moment des transferts de commande des uns aux autres. Leur complexité est liée au fait qu'ils possèdent souvent des propriétés qui sont non seulement superflues, mais qui entravent ou empêchent l'exécution de l'opération désirée. Des mécanismes supplémentaires doivent alors généralement être prévus pour compenser les interactions intempestives et les positionnements incorrects.

De nombreux dispositifs connus utilisent des verrous dont le fonctionnement requiert des déplacements complexes, ces systèmes de verrouillage interférant également souvent avec les opérations d'assemblage ou de séparation.

La direction d'assemblage est en outre fréquemment imposée par la conception du type de liaison utilisée ce qui limite clairement l'application du dispositif concerné.

Enfin, lorsque les éléments d'assemblage sont distincts des pièces supports d'objets à assembler, il se produit un conflit entre leurs actions respectives, qui se traduit par une perte du contrôle de l'opération d'assemblage ou de séparation, et oblige à prévoir des composants supplémentaires pour résoudre ce problème.

Plus précisément, de nombreux dispositifs fonctionnent à base de goupilles ou de rails de guidage. Une telle conception fait apparaître des surfaces de glissement et de frottement, parallèles à la direction de mouvement, qui entravent le déplacement relatif des différents composants de l'assemblage. Lorsque l'on recherche une très haute précision du positionnement latéral des pièces, en même temps qu'un assemblage démontable, un conflit apparait entre deux fonctions : le centrage et le positionnement obligent à réduire le jeu entre chaque goupille et son orifice de glissement, alors que l'opération ultérieure de séparation exige que ce jeu soit suffisamment important pour permettre leur déplacement relatif.

Dans le cas où on utilise des surfaces de verrouillage perpendiculaires à la direction de mouvement, ce qui est fréquent, on a alors des problèmes de friction lors des opérations de fixation et de relâchement. Il se produit en effet, là encore, un conflit entre les tolérances découlant respectivement des exigences de positionnement et de déplacement relatif.

On a essayé de résoudre certains de ces problèmes en utilisant des surfaces de liaison coniques à faible angle d'ouverture. Mais les dispositifs correspondant présentent des problèmes potentiels de coincement et de blocage, puisqu'ils conduisent à fixer des tolérances étroites pour obtenir un positionnement correct. Ils utilisent le plus souvent des chemises ou des fourreaux de blocage rapportés, et posent des problèmes de contraintes rotationnelles, qui sont réellement des sources de mauvais fonctionnement.

Les brevets FR-A-1 123 172 et CH-A-98 330 divulguent un dispositif permettant la fixation démontable d'un objet tel qu'une caméra de télévision sur un support. Le dispositif de liaison comprend un élément mâle et un élément femelle, l'élément mâle venant s'emboîter dans l'élément femelle et ayant deux faces latérales non parallèles convergeant l'une vers l'autre et deux faces parallèles dont une des faces sert de surface de glissement de sorte à former une liaison en queue d'aronde. Lorsque les deux éléments sont étroitement assemblés, leur déblocage peut être rendu difficile ou même impossible à la suite d'un grippage du fait que les seules surfaces actives sont les surfaces latérales convergentes. En effet, la surface de glissement, c'est-à-dire la base de la queue d'aronde, ne joue aucun rôle dans le blocage du mécanisme.

En conséquence, l'invention se propose de remédier à l'ensemble des inconvénients mentionnés ci-dessus.

A cet effet, l'invention concerne un dispositif de liaison démontable, pour l'assemblage et la solidarisation de pièces du type constitué de deux éléments de liaison complémentaires mâle et femelle, la surface de liaison des éléments étant constituée de trois facettes qui sont au moins des parties de trois faces respectives d'un tétraèdre et forment des parois fixes de centrage des éléments complémentaires l'un par rapport à l'autre, une force de verrouillage (F) étant appliquée sur une quatrième facette qui est au moins une partie de la quatrième face de ce tétraèdre, le plan de chacune des trois facettes de centrage et la direction de ladite force de verrouillage (F) appliquée sur l'élément mâle définissant un angle d'inclinaison respectif de manière que ladite force de verrouillage (F) produise une réaction issue des trois facettes de centrage inclinées.

Le choix d'une surface de liaison tétraédrique est caractérisé par le fait que trois forces suffisent à immobiliser un objet dans l'espace, ces forces étant induites par les trois parois fixes de centrage de la surface de liaison tétraédrique. Le blocage et le verrouillage de la liaison s'effectuent sur la quatrième face du tétraèdre et conduisent à une immobilisation complète de l'assemblage dans la position de centrage.

Le doigt de verrouillage amovible est susceptible de prendre deux positions :

– une position de verrouillage dans laquelle il bloque l'assemblage des éléments complémentaires ;

– une position de dégagement, dans laquelle la séparation des deux éléments de liaison est rendue possible.

Le dispositif selon l'invention comporte ainsi de très nombreux avantages :

– il présente une grande simplicité de fabrication et de fonctionnement. Quatre plans non parallèles deux à deux suffisent à fournir toutes les contraintes nécessaires ; ces plans peuvent être réduits chacun à une zone d'appui sensiblement ponctuelle. Le dispositif est donc d'une réalisation peu sophistiquée, et son fonctionnement est également simple, aussi bien pour l'assemblage que pour la désolidarisation.

– il assure une précision remarquable de l'assemblage. Les plans inclinés assistent le positionnement lors de l'assemblage et ne gênent en rien l'opération de séparation. Ceci permet d'assurer une fixation, même sous contrainte extérieure sévère, comme des vibrations ou autre. Le guidage en position de verrouillage permet alors de réaliser l'assemblage exactement au moment souhaité

– son fonctionnement ne requiert que des efforts faibles. En effet, toutes les surfaces de glissement ont été complètement éliminées. Le guidage à l'assemblage et le jeu croissant des pièces lors de la désolidarisation limitent les forces mises en jeu. L'application de la force de verrouillage perpendiculairement à la quatrième facette du tétraèdre de liaison n'a qu'une fonction de blocage, puisque lors de son application, l'assemblage est déjà centré. Toutes les contraintes sont, en outre, ramenées à zéro au moment où la force de verrouillage est supprimée.

– le dispositif est extrêmement maniable. Il peut être utilisé dans différentes directions déterminées, en fonction des charges externes. Le rapprochement des éléments de liaison peut s'effectuer pratiquement dans toutes les directions axiales et latérales, et on a vu plus haut que le fonctionnement est possible même en environnement difficile. Enfin, le dispositif peut être aussi bien actionné manuellement qu'automatiquement, et est notamment idéal pour une manoeuvre à l'aide d'une seule main.

– le dispositif procure une grande sécurité de fonctionnement. L'assemblage est en effet bloqué dans les deux sens pour chacun des 6 degrés de liberté, et le fonctionnement est contrôlé complètement de bout en bout. Enfin, le dispositif selon l'invention présente encore divers avantages, tels que la possibilité de placer les quatre plans d'appui et de verrouillage très éloignés les uns des autres sans que cela pose aucun problème particulier. C'est l'assemblage lui-même qui supporte la charge, qui peut sans problème être d'une valeur élevée après verrouillage.

En outre, le dispositif ne requiert aucun angle aigu pour fonctionner, ce qui le rend d'une sécurité parfaite lors d'une manoeuvre manuelle par un opérateur, particulièrement lorsque l'on arrondit tous les angles extérieurs.

D'autres caractéristiques et avantages de l'invention apparaitront à la lecture de la description suivante d'un mode de réalisation préférentiel, et des dessins annexés dans lesquels :

– la Fig. 1 représente la théorie de l'immobilisation de l'assemblage au moyen des faces tétraédriques du dispositif selon l'invention.

– la Fig. 2 représente schématiquement les deux éléments de liaison tétraèdrique du dispositif selon l'invention ;

– la Fig. 3 représente un mode de réalisation démonstratif concret du dispositif selon l'invention, sous deux versions légèrement différentes ;

– les Figs 4 et 5 représentent deux modes d'application préférentiels du dispositifs selon l'invention ;

Afin de bien comprendre quelles doivent être les qualités d'un assemblage, et pour distinguer les avantages du dispositif de liaison selon l'invention, il est important de s'attacher tout d'abord à la nature essentielle des fonctions d'un assemblage.

Pour qu'un objet soit immobilisé dans l'espace de manière complète, il doit être rigidement fixé, dans les deux sens, selon chacun de ses six degrés de liberté. L'immobilisation peut être obtenue sous l'action d'un peu de forces, de moments, et de réactions qui maintiennent l'objet en équilibre.

Pour que l'objet puisse être déplacé à partir de cette position fixe, l'ensemble de ces forces et moments doit être ramené à zéro, afin de permettre le mouvement dans la direction souhaitée, et également pour éviter que toute force ou tout moment résiduels provoquent un déplacement indésirable.

La maîtrise en simultané du jeu complet de forces et de moments peut poser des problèmes, auxquels l'invention apporte des réponses.

L'invention utilise le fait que les forces peuvent être décomposées en plusieurs composantes s'appliquant dans d'autres directions que celle de la force initiale, et en ce que les moments peuvent être remplacés par des couples force et moment s'exerçant dans des sens différents.

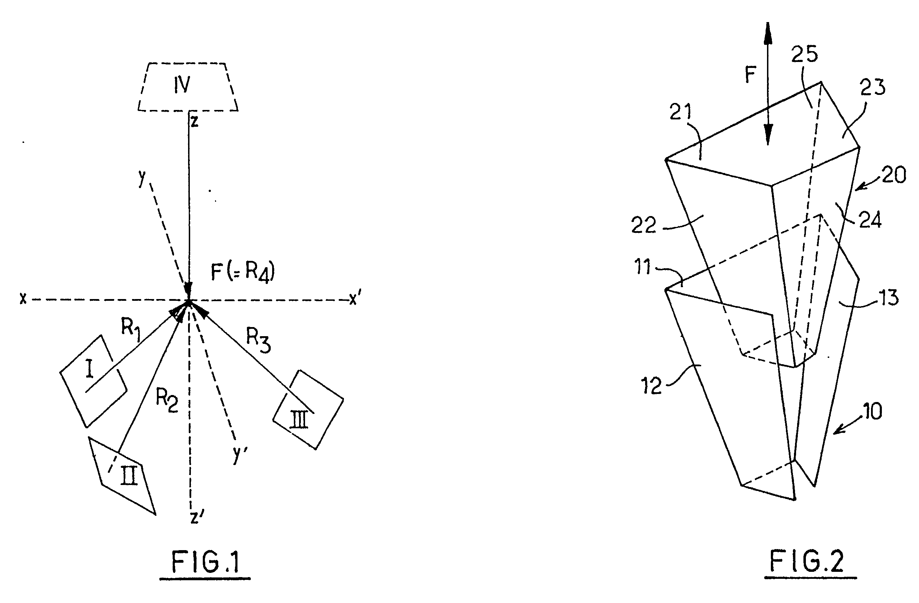

Or, pour obtenir une immobilisation complète en translation, seules quatre forces convergentes sont nécessaires ; il s'agit par exemple, comme représenté en figure 1, des forces $R_1$, $R_2$, $R_3$, $R_4$ (F). Ces forces peuvent se décomposer selon les axes x, x' ; y, y' ; z, z'. De la même manière, seuls quatre moments sont nécessaires pour obtenir une immobilisation totale en rotation.

Les contraintes d'immobilisation peuvent être actives, c'est-à-dire exercées par l'application d'une force ou d'un moment, ou bien passives, à savoir sous la forme d'une réaction fournie par une butée mécanique.

Or, si trois de ces forces et moments sont fournis chacun par réaction, à partir d'un plan incliné adéquat, il apparaît que toutes les contraintes nécessaires peuvent être fournies au moyen d'une force unique, s'exerçant dans une direction déterminée. Celle-ci produit en effet une réaction issue des trois plans inclinés, dont l'angle d'inclinaison a été soigneusement calculé. En l'occurrence et comme représenté en figure 1, les plans inclinés 1, 2, 3 exercent chacun une force de réaction $R_1$, $R_2$, $R_3$, perpendiculaire chacune à leur plan I, II, III respectif, lorsque s'applique la force unique F, perpendiculairement au plan IV préalablement déterminé.

Le retrait de cette force F permet immédiatement le mouvement en sens inverse de son effet antérieur.

Il est à noter que la force d'immobilisation pourrait aussi bien être appliquée sous la forme d'une réaction à partir d'un autre plan incliné convenable.

Pour en faciliter la compréhension, on peut représenter les plans sous la forme de facettes d'un tétraèdre (Cf. Fig. 2). La forme du dispositif de liaison selon l'invention découle directement de cette constatation, d'où il tire son nom : dispositif de liaison démontable à tétraèdre. La caractéristique essentielle de l'invention est donc que toutes les contraintes nécessaires à l'immobilisation sont fournies par réaction au moyen d'éléments statiques, à la seule exception de la force de verrouillage. Ceci signifie que le fonctionnement de l'assemblage est assuré par la commande d'une force unique.

Comme représenté en figure 2, le dispositif de liaison comprend donc deux éléments 10, 20 :

– l'élément femelle 10 présente une forme concave tétraèdrique, inscrite entre la paroi 11 et les deux parois 12, 13 prolongées.

– l'élément mâle 20 présente une forme convexe tétraèdrique complementaire de l'élément femelle 10, constituée de la paroi 21 et des deux parois 22, 23. Selon le mode de réalisation présenté, la surface de liaison de l'élément mâle 10 et de l'élément femelle 20 est donc un tétraèdre tronqué à ses parties supérieure et inférieure et portant un méplat 24 sur une face latérale.

La force F s'exerce sensiblement verticalement sur la face 25, pour assurer l'emboîtement et la désolidarisation des deux éléments mâle 20 et femelle 10.

Le mode de réalisation préférentiel représenté en figure 2 utilise donc des facettes 11, 12, 13 ; 21, 22, 23 relativement étendues, pour obtenir le jeu de force $R_1$, $R_2$, $R_3$ de la figure 1. Néanmoins, les faces de réaction I, II, III peuvent être ramenées à des zones sensiblement ponctuelles, tout à fait aptes à fournir les réactions résultantes aux lieux et directions convenables. Dans tous les cas, le dispositif selon l'invention permet tout à fait de positionner chacun des plans de réaction à l'emplacement souhaité ou imposé par l'environnement immédiat de l'assemblage ; à cet égard, les plans de réaction peuvent être placés très éloignés les uns des autres, du moment qu'ils respectent leurs angles d'inclinaison respectifs les uns par rapport aux autres.

Enfin, et afin d'éviter l'inconvénient lié au grippage des liaisons coniques, les angles entre la direction de la force F et le plan de chacune des trois facettes du tétraède de liaison doivent être supérieurs à l'angle de friction, soit 5 degrés environ ; d'autre part, et très clairement ces angles doivent être inférieurs à ceux qui permettraient un quelconque mouvement latéral des éléments 10, 20 l'un par rapport à l'autre, sous l'action d'une charge extérieure, soit 45 degrés environ. De préférence chacun de ces angles est compris entre 15 et 20 degrés.

L'assemblage est donc réalisé lorsque l'on a introduit l'élément mâle 20 dans l'élément femelle 10. Le positionnement est obtenu lorsque tous les points de contact sont en relation correcte, et la résistance requise de l'assemblage est atteinte lors de l'application de la force de verrouillage F appropriée.

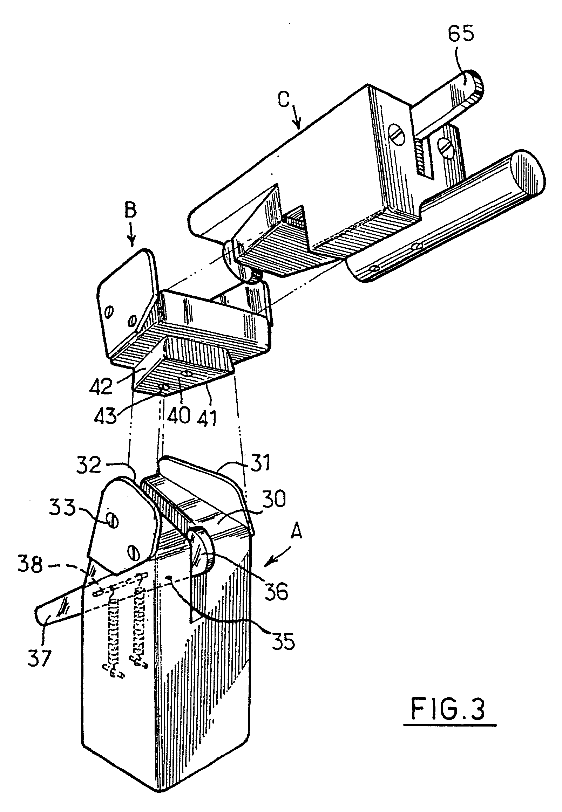

Le prototype réalisé, et représenté en figure 3, illustre deux versions différentes de réalisation du dispositif de liaison selon l'invention.

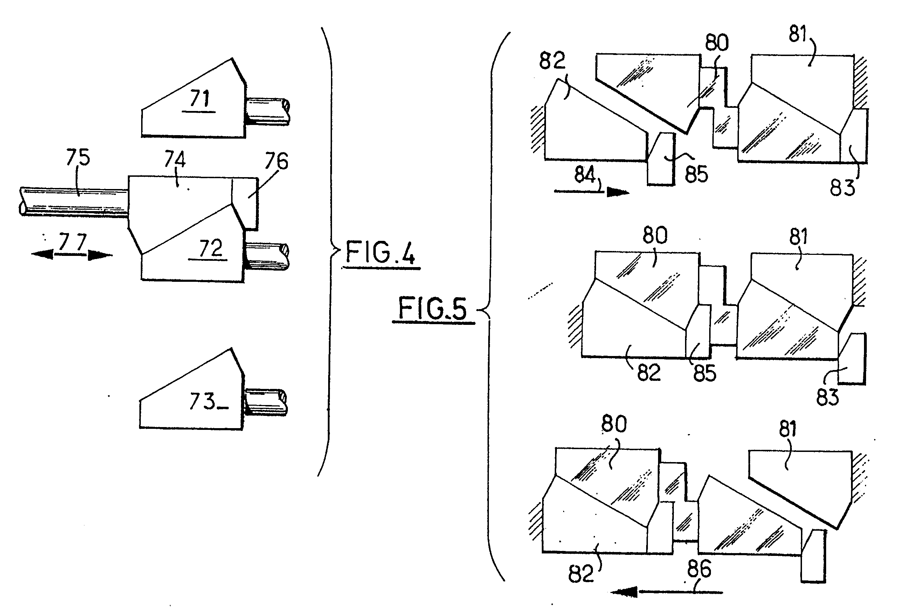

Le prototype représenté est constitué de trois pièces distinctes A, B, C. La pièce B est solidarisable à la pièce A, au moyen d'un premier assemblage A, B et la pièce C est solidarisable à la pièce B au moyen d'un second assemblage B, C. Ce prototype illustre tout à fait l'application du dispositif selon l'invention à la manipulation robotisée représentée en figure 5 l'objet étant symbolisé par le composant B qui peut être transféré entre des bras manipulateurs A, C.

Pour l'assemblage A, B, la pièce A porte l'élément de liaison femelle, constitué de trois facettes 30, 31, 32 délimitant un espace concave tétraèdrique. La facette 30 est constituée d'une paroi frontale taillée dans la pièce A, et biseautée, flanquée de part et d'autre de deux aîles rigides formant les facettes 31, 32, rapportées sur la pièce A au moyen de vis 33 ou autre. L'élément mâle de l'assemblage A, B est monté sur la pièce B, et est formée d'un tronc de tétraèdre dont les facettes 40, 41, 42 correspondent aux facettes 30, 31, 32 de l'élément femelle de la pièce A. L'élément mâle est rapporté sur la pièce B au moyen de vis 43 ou autre.

L'assemblage A, B est réalisé lorsque l'élément mâle 40, 41, 42 est encastré à l'intérieur de l'élément femelle 30, 31, 32 ; le verrouillage est assuré par le doigt de verrouillage 35.

Ce doigt de verrouillage est constitué d'une tige centrale, terminé par un crochet de serrage 36, affleurant au volume concave tétraèdrique de l'élément femelle à la pièce A, l'extrémité opposée audit crochet 36 formant un bras de commande 37 du déplacement dudit doigt de verrouillage 35. Ce doigt est susceptible de prendre deux positions :

   – une position de dégagement, dans laquelle il se situe en dehors de la surface tétraèdrique de liaison et permet l'introduction de l'élément mâle de l'assemblage dans l'élément femelle ;

   – une position de verrouillage, dans laquelle il fait saillie, et vient appliquer la force F de verrouillage selon une direction adéquate, en constituant par son extrémité agissante, une portion du quatrième plan du tétraède de liaison. Pour des commodités de réalisation, et selon le mode de réalisation représentée le doigt de verrouillage 36 est articulé en rotation autour d'un axe 38 ; il peut être rappelé élastiquement, le cas échéant, dans la position de verrouillage ou encore dans la position de dégagement.

Il est à noter que selon cette première version de l'assemblage, le doigt de verrouillage 36 est monté sur la pièce A portant l'élément femelle de liaison. Au contraire, l'assemblage B, C est réalisé au moyen d'un doigt de verrouillage 65, similaire au doigt de verrouillage 35 de la pièce A, mais monté cette fois sur la pièce C portant l'élément mâle de l'assemblage B, C.

Le fonctionnement de cet assemblage B, C est, pour le reste, symétrique à celui de l'assemblage A, B.

Il est à noter que la charge que peut supporter l'assemblage est directement liée à l'intensité de la force de verrouillage, et à la résistance mécanique des parties constitutives des éléments d'assemblage.

La force de verrouillage est préférentiellement appliquée au moyen d'un bras de levier, comme illustré par les doigts de verrouillage 35, 65 en figure 3. Ceci permet de n'utiliser qu'une force de commande faible, en comparaison avec la force réelle de verrouillage ou de déverrouillage de l'assemblage. Il est également important de choisir soigneusement l'angle de la facette de verrouillage pour éviter le dégagement intempestif du verrou.

Lorsque la force de verrouillage est retirée, toutes les forces de réaction reviennent à zéro, et l'objet reste en position mais est libre d'être déplacé dans le sens opposé à l'action antérieure de la force de verrouillage.

Les figures 4, 5 illustrent quelques applications préférentielles du dispositif de liaison démontable selon l'invention. Le dispositif peut être utilisé dans tous ordres de grandeur et de dimension, aussi bien par exemple pour la fixation de petits objets dans des installations d'expérimentation, que pour le positionnement et la fixation de structures orbitales ; chaque application implique bien évidemment un dimensionnement et des valeurs de résistance des éléments spécifiques.

La figure 4 illustre ainsi schématiquement l'utilisation du dispositif de liaison pour la manipulation robotisée de manettes de commande 71, 72, 73. Ces manettes sont par exemple pourvues d'un élément de liaison femelle, qui est engagé par l'élément de liaison mâle 74, monté au bout d'un bras de manipulateur 75, et muni d'un doigt de verrouillage amovible 76. Lorsque les deux éléments 72, 74 sont assemblés, et verrouillés grâce au doigt 76, la manette 72 peut être déplacée suivant la direction 77.

La figure 5 illustre pour sa part, l'utilisation du dispositif de liaison selon l'invention pour la manipulation d'objets en application robotique, et plus particulièrement pour le transfert d'un objet 80 d'un premier poste de fixation 81 à un second poste de fixation 82, en utilisant en coopération deux dispositifs de liaison. En étape 1, l'objet 80 est fixé sur le poste 81, par l'encastrement d'un élément mâle dans un élément femelle, et verrouillé au moyen du doigt de verrouillage 83. Le poste 82 est approché selon la flèche 84, son doigt de verrouillage 85 étant en position de dégagement.

L'étape 2 illustre le verrouillage du doigt 85 sur le second assemblage réalisé entre l'objet 80 et le poste 82, suivi du dégagement du doigt de verrouillage 83 pour désolidariser l'objet 80 du poste 81. Cette opération est rendue possible par le fait que l'objet 80 est d'ores et déjà complètement contrôlé par le poste 82. On peut alors éloigner le poste 82 chargé de l'objet 80 dans le sens de la flèche 86 (étape 3).

On constate que selon ces applications, l'objet reste complètement sous contrôle à tous moments de l'opération de transfert. Ceci est réalisé notamment par le fait que l'objet 80 est fermement fixé au poste 82 chargé du transfert, même s'il s'agit d'un assemblage temporaire, pour prévenir toutes pertes de contrôle. Ainsi, le moment délicat de la transition d'un poste à l'autre, souvent problématique avec les dispositifs de manipulation de l'art antérieur, devient tout à fait maîtrisé en utilisant l'invention. Ceci est notamment obtenu par le fait qu'une force physique est nécessaire pour contrôler chaque assemblage.

On peut également penser à d'autres applications non représentées, comme par exemple un mécanisme de maintien, d'enclenchement ou de dégagement pour un mât, une antenne, ou un panneau solaire, en application terrestre ou orbitale. L'invention est également applicable pour la réalisation d'embrayage et d'accouplement. Le dispositif peut également être utilisé dans des connecteurs électriques ou de fluides.

L'invention peut dans tous les cas, servir à toutes sortes d'assemblages de pièces et de structures, du fait de sa grande souplesse d'adaptation et de mise en oeuvre.

## Revendications

1. Dispositif de liaison démontable, pour l'assemblage et la solidarisation de pièces du type constitué de deux éléments de liaison complémentaires mâle (20) et femelle (10), la surface de liaison des éléments (10, 20) étant constituée de trois facettes (11, 21 ; 12, 22 ; 13, 23) qui sont au moins des parties de trois faces respectives d'un tétraèdre et forment des parois fixes de centrage des éléments complémentaires (10, 20) l'un par rapport à l'autre, une force de verrouillage (F) étant appliquée sur une quatrième facette (25) qui est au moins une partie de la quatrième face de ce tétraèdre, le plan de chacune des trois facettes de centrage et la direction de ladite force de verrouillage (F) appliquée sur l'élément mâle (20) définissant un angle d'inclinaison respectif de manière que ladite force de verrouillage (F) produise une réaction issue des trois facettes de centrage inclinées.

2. Dispositif selon la revendication 1 caractérisé en ce que l'angle d'inclinaison est supérieur à 5° et inférieur à 45° et de préférence compris entre 15° et 20°.

3. Dispositif selon la revendication 1 caractérisé en ce qu'au moins une des facettes (11, 21 ; 12, 22 ; 13, 23) de la surface de liaison est réduite à une zone d'appui sensiblement ponctuelle.

4. Dispositif selon la revendication 1 caractérisé en ce que l'élément mâle de liaison est constitué d'un tronc de tétraèdre (40, 41, 42) rapporté sur une des pièces (B) à assembler, et en ce que l'élément femelle de liaison, présentant un profil concave tétraèdrique complémentaire dudit élément mâle de liaison, est constitué d'une part, d'une paroi frontale (30) taillée dans la seconde pièce à assembler (A), et d'autre part, de deux ailes rigides (31, 32) rapportées sur ladite seconde pièce (A), selon un angle aigu caractéristique du tétraèdre, par rapport à ladite paroi frontale (30).

5. Dispositif selon la revendication 1 caractérisé en ce que la force de verrouillage (F) est appliquée par un doigt de verrouillage (35, 65) constitué d'une tige articulée autour d'un axe de rotation (38) et terminée par un crochet de serrage (36), l'extrémité opposée audit crochet (36) formant un bras de commande (37) du déplacement dudit doigt (35) entre deux positions :

– une position de verrouillage dans laquelle le crochet (36) exerce la force (F) sur la facette de verrouillage du tétraèdre ;

– une position de dégagement dans laquelle le crochet de serrage (36) libère les deux éléments de liaison complémentaires.

6. Dispositif selon la revendication 5 caractérisé en ce que le doigt de verrouillage (35) est rappelé élastiquement en position de verrouillage,

7. Application du dispositif démontable selon l'une quelconque des revendications de 1 à 6 au maintien et au verrouillage de structures orbitales ou terrestres.

8. Application du dispositif de liaison démontable selon l'une quelconque des revendications de 1 à 6 au transfert robotisé d'objets (80) d'un poste de fixation (81) à un autre poste de fixation (82), caractérisé en ce que l'opération de transfert comprend les étapes suivantes :

– l'objet (80) est préalablement fixé par un dispositif de liaison tétraèdrique, au poste (81), et verrouillé au moyen du doigt de verrouillage (83);

– on engage l'objet (80) au moyen d'un second dispositif de liaison tétraèdrique, avec le poste (82), et on verrouille ledit second dispositif au moyen d'un doigt de verrouillage (85) ;

– on déverrouille le doigt de verrouillage (83) dudit premier dispositif de liaison tétraèdrique ;

– on éloigne du poste (81) l'ensemble rigide formé du poste (82) et de l'objet (80).

## Ansprüche

1. Zerlegbare Verbindungsvorrichtung für die Zusammenfügung und gegenseitige Befestigung von Stücken, gebildet aus zwei komplementären, männlichen (20) und weiblichen (10) Verbindungselementen(10, 20), bestehend aus den Seitenflächen (11, 21 ; 12, 22 ; 13, 23), die mindestens zum Teil aus drei Flächen eines Tetraeders bestehen und feste Zentrierungswände der komplementären Elemente (10, 20) zueinander bilden, wobei bei Aufbringung einer Verriegelungskraft (F) auf eine vierte Fläche (25), die mindestens einen Teil der vierten Fläche des Tetraeders bildet, die Ebene jeder der drei Zentrierflächen und die Richtung der Verriegelungskraft (F), aufgebracht auf das einsteckbare Element (20), einen Neigungswinkel derart definieren, daß die Verriegelungskraft (F) eine daraus hervorgehende Reaktion der drei geneigten Zentrierflächen erzeugt.

2. Vorrichtung nach Anspruch 1, **dadurch gekennzeichnet**, daß der Neigungswinkel über 5° und unter 45° und vorzugsweise zwischen 15° und 20° beträgt.

3. Vorrichtung nach Anspruch 1, **dadurch gekennzeichnet**, daß mindestens eine der Flächen (11, 21 ; 12, 22 ; 13, 23 ; 25) der Oberfläche der Verbindung auf eine merklich punktuelle Stützzone reduziert ist.

4. Vorrichtung nach Anspruch 1, **dadurch gekennzeichnet**, daß das einsteckbare Verbindungselement aus einem Tetraeder-Stumpf (40, 41, 42) gebildet ist, angeordnet an einem Zusammenfügungsstück (B), und daß das aufnehmende Verbindungselement, das ein tetraedrisches Konkavprofil komplementär zum einsteckbaren Verbindungselement bildet, einerseits gebildet ist durch eine taillierte Frontwand (30) im zweiten zusammenfügbaren Element (A) und andererseits durch zwei starre Flügel (31, 32), angeordnet am Element (A) unter einem vom Tetraeder charakterisierten spitzen Winkel in bezug auf die Frontwand (30).

5. Vorrichtung nach Anspruch 1, **dadurch gekennzeichnet**, daß die Verriegelungskraft (F) aufgebracht wird durch einen Verriegelungsfinger (35, 65), gebildet durch einen um eine Drehachse (38) schwenkbaren Stiel, der an einem Ende mit einem Verriegelungshaken (36) versehen ist und dessen anderes Ende einen Betätigungshebel (37) für die Verstellung des Fingers (35) zwischen zwei Stellungen bildet, nämlich einer Verriegelungsstellung, in der der Haken (36) die Verriegelungskraft (F) auf die Verriegelungsfläche des Tetraeders ausübt und einer Entriegelungsstellung, in der der Haken (36) die beiden komplementären Verbindungselemente freigibt.

6. Vorrichtung nach Anspruch 5, **dadurch gekennzeichnet**, daß der Verriegelungsfinger (35) elastisch in Verriegelungsstellung gehalten ist.

7. Vorrichtung nach einem der Ansprüche 1 bis 6 zum Zusammenhalten und Verriegeln von orbitalen oder terrestrischen Strukturen.

8. Verwendung der zerlegbaren Verbindu svorrichtung nach einem der Ansprüche 1 bis 6 für den Transfer eines roboterisierten Gegenstandes (80) von einer Feststelle (81) zu einer anderen Feststelle (82), **dadurch gekennzeichnet**, daß die Transferoperation mit folgenden Schritten durchgeführt wird :

Der Gegenstand (80) wird durch eine tetraedrische Verbindungsvorrichtung an der Feststelle (81) vorjustiert fixiert und mit einem Verriegelungsfinger (83) verriegelt ;

der Gegenstand (80) wird durch eine zweite tetraedrische Verbindungsvorrichtung mit der Feststelle (82) in Eingriff-gebracht und mit einem Verriegelungsfinger (85) verriegelt ;

der Verbindungsfinger (83) der ersten Verbindungsvorrichtung wird entriegelt ;

dann wird die Feststelle (81) von der star ren Verbindung entfernt, die aus der Feststelle (82) und dem Objekt (80) gebildet ist.

## Claims

1. Demountable connecting device, for the assembly and connecting together of components of the type formed by two complementary male (20) and female (10) connecting components, the connecting surface of the components (10, 20) consisting of three facets (11, 21 ; 12, 22 ; 13, 23, which are at least parts of three respective faces of a tetrahedron and form fixed walls for aligning complementary components (10, 20) with respect to each other, a locking force (F) being applied to a fourth facet (25) which is at least a part of the fourth face of this tetrahedron, the plane of each of the three aligning facets and the direction of the said locking force (F) applied to the male component (20) defining a respective angle of inclination so that the said locking force (F) produces a reaction originating from the three inclined aligning facets.

2. Device according to claim 1, characterised in that the angle of inclination is greater than 5° and less than 45°, and preferably between 15° and 20°.

3. Device according to claim 1, characterised in that at least one of the facets (11, 21 ; 12, 22 ; 13, 23) of the connecting surface is reduced to a bearing area consisting substantially of a point.

4. Device according to claim 1, characterised in that the male connecting component consists of a truncated tetrahedron (40, 41, 42) fastened to one of the pieces (B) to be assembled, and in that the female connecting component, having a tetrahedral concave shape complementary to the said male connecting component, is formed on the one hand by a front wall (30) cut in the second piece to be assembled (A) and, on the other hand, by two rigid flanges (31, 32) fixed to the said second piece (A), along a characteristic acute angle of the tetrahedron, with respect to the said front wall (30).

5. Device according to claim 1, characterised in that the locking force (F) is applied by a locking finger (35, 65) consisting of a stem articulated about an axis of rotation (38) and terminating in a clamping hook (36), the end opposite to the said hook (36) forming a control arm (37) for moving the said finger (35) between two positions :

– a locking position in which the hook (36) exerts the force (F) on the locking facet of the tetrahedron ;

– a disengaging position in which the clamping hook (36) frees the two complementary connecting components.

6. Device according to claim 5, characterised in that the locking finger (35) is restored elastically to its locking position.

7. Application of the demountable device according to any one of claims 1 to 6 to the holding and locking of orbital or terrestrial structures.

8. Application of the demountable connecting device according to any one of claims 1 to 6 to the robotised transfer of objects (80) from a fixing station (81) to another fixing station (82), characterised in that the transfer operation comprises the following steps :

– the object (80) is first of all fixed, by a tetrahedral connecting device, to the station (81), and locked by means of the locking finger (83) ;

– the object (80) is engaged, by means of a second tetrahedral connecting device, with the station (82), and the said second device is locked by means of a locking finger (85) ;

– the locking finger (83) on the said first tetrahedral connecting device is unlocked ;

– the rigid assembly formed by the station (82) and the object (80) is moved away from the station (81).

FIG.2

FIG.1

FIG.3

FIG.5

FIG.4